Europäisches Patentamt

European Patent Office

Office européen des brevets

(11) Veröffentlichungsnummer: **0 292 614 B1**

# EUROPÄISCHE PATENTSCHRIFT

(45) Veröffentlichungstag der Patentschrift: **11.03.92**

(51) Int. Cl.⁵: **B29C 47/34**

(21) Anmeldenummer: **87118594.8**

(22) Anmeldetag: **15.12.87**

(54) **Abzugsvorrichtung für Schlauchfolien.**

(30) Priorität: **27.05.87 DE 8707626 U**

(43) Veröffentlichungstag der Anmeldung:
**30.11.88 Patentblatt 88/48**

(45) Bekanntmachung des Hinweises auf die
Patenterteilung:
**11.03.92 Patentblatt 92/11**

(84) Benannte Vertragsstaaten:
**AT BE CH DE FR GB IT LI LU NL SE**

(56) Entgegenhaltungen:
EP-A- 0 183 244          EP-A- 0 191 114
FR-A- 1 196 563          FR-A- 2 062 462
FR-A- 2 201 679          US-A- 2 716 026
US-A- 3 313 461          US-A- 3 716 322

(73) Patentinhaber: **Alpine Aktiengesellschaft**
**Peter-Dörfler-Strasse 13-25**
**W-8900 Augsburg 22(DE)**

(72) Erfinder: **Karl, Veit-Holger, Dr.-Ing.**
**Bismarckstrasse 14**
**W-8700 Würzburg(DE)**
Erfinder: **Mahler, Franz, Dipl.-Ing. (FH)**
**Rüsterweg 18**
**W-8900 Augsburg(DE)**
Erfinder: **Greisel, Josef, Dipl.-Ing. (FH)**
**Schnitterstrasse 23**
**W-8900 Augsburg 21(DE)**

(74) Vertreter: **Charrier, Rolf, Dipl.-Ing.**
**Postfach 260 Rehlingenstrasse 8**
**W-8900 Augsburg 31(DE)**

## Beschreibung

Die Erfindung betrifft eine Abzugsvorrichtung für eine im Blasverfahren von einem Extruder mit Folienblaskopf hergestellte Schlauchfolie nach den Oberbegriff des Anspruches 1.

Bei der aus der DE-PS 19 48 935 bekannten Abzugsvorrichtung wird die Schlauchfolie zwischen zwei Abquetschwalzen geführt, die um eine vertikale Drehachse schwenkbar sind. Von dort wird die flachgelegte Folie über eine Umlenkstange geführt, welche zusammen mit den Abquetschwalzen schwenkbar ist. Von dort wird die Folie über eine Wendestange, eine weitere Umlenkstange und eine weitere Wendestange geführt, von wo sie einer Aufwickelvorrichtung zugeführt wird, bei welcher die flachgelegte Folie aufgewickelt wird. Von der weiteren Wendestange wird die Folie über eine Umlenkwalze der Aufwickelvorrichtung geführt. Die weitere Umlenkstange ist um keine vertikale Achse schwenkbar, während die beiden Wendestangen um die vorgenannte vertikale Achse schwenkbar sind. Die jeweilige Schwenkstellung der beiden Wendestangen wird durch die Folie erzwungen.

Von der weiteren Wendestange zur Aufwickelvorrichtung tritt üblicherweise bei der flachgelegten Folie ein Kantenversatz auf, der um so größer ist, je geringer die Reibung zwischen der Folie und den Umlenk- und den Wendestangen ist. Diese Reibung ist abhängig von der Art des verarbeiteten Kunststoffmaterials. Dieser Kantenversatz führt dazu, daß die Folie nicht einwandfrei aufgewickelt wird. Bei Folien, bei denen eine sehr geringe Reibung auftritt, tritt sogar ein Abgleiten der Folie an den Wendestangen auf.

Um diesen Kantenversatz auszugleichen, ist es bekannt, eine Kantensteuerung bei der Aufwickelvorrichtung vorzusehen. Diese besteht aus einer den Kantenverlauf der Schlauchfolie erfassenden Meßapparatur und zwei vor dieser Meßapparatur angeordneten Walzen, die um eine zu den Walzenachsen senkrecht verlaufende Achse schwenkbar sind. Dies bedingt zwei zusätzliche Walzen bei der Aufwickelvorrichtung. Diese können jedoch nicht verhindern, daß die Schlauchfolie von den Wendestangen abgleitet, wenn das vorerwähnte Kunststoffmaterial verwendet wird.

Eine weitere aus dem DE-GM 85 01 177 bekannte Abzugsvorrichtung weist außer den beiden Abquetschwalzen zwei oder drei Wendestangen auf, die jeweils um eine vertikale Drehachse schwenkbar sind. Die Schwenkbewegung dieser Wendestangen wird bestimmt durch die Drehbewegung der Abquetschwalzen um ihre vertikale Drehachse. Zu diesem Zweck ist jeder Wendestange ein sie verschwenkender Motor zugeordnet. Auch hier tritt je nach verarbeitetem Kunststoffmaterial ein Kantenversatz auf. Umlenkstangen sind bei dieser Abzugsvorrichtung nicht vorgesehen.

Es besteht die Aufgabe, diesen Kantenversatz durch Steuermaßnahmen innerhalb der Abzugsvorrichtung auszugleichen.

Gelöst wird diese Aufgabe mit den kennzeichnenden Merkmalen des Anspruches 1. Vorteilhafte Ausgestaltungen sind den Unteransprüchen entnehmbar.

Zwei Ausführungsbeispiele werden nachfolgend anhand der Figuren näher erläutert. Es zeigen:

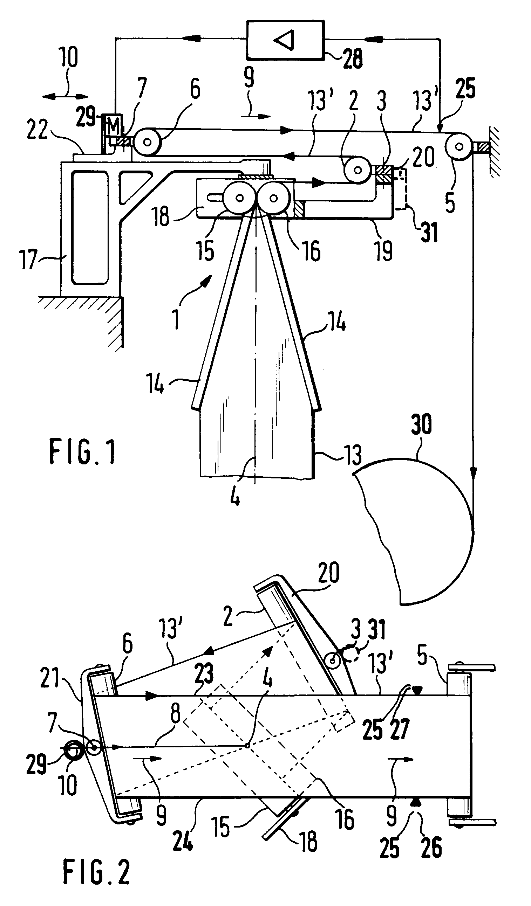

Fig. 1    Eine Seitenansicht einer ersten Ausführungsform der Abzugsvorrichtung;

Fig. 2    eine Draufsicht auf diese Vorrichtung;

Fig. 3    eine Seitenansicht einer zweiten Ausführungsform und

Fig. 4    eine Draufsicht auf diese zweite Vorrichtung.

Die vom Blaskopf kommende Schlauchfolie 13 gelangt zur Abquetschvorrichtung 1, wo sie zwischen den Flachlegeplatten 14 flachgelegt wird. Danach wird sie durch den Spalt von zwei Abzugs- bzw. Abquetschwalzen 15, 16 geführt und von dort zu einer ersten Wendestange 2. Von dieser Wendestange 2 verläuft die flachgelegte Schlauchfolie 13' zu einer zweiten Wendestange 6, von wo sie zu einer Umlenkwalze 5 der Aufwickelvorrichtung gelangt, die mit 30 bezeichnet ist.

Die beiden Flachlegeplatten 14 und die Abzugswalzen 15, 16 werden von einem Hilfsgestell 18 getragen, das von einem stationären Gestell 17 drehbar gelagert ist, derart, daß das Hilfsgestell 18 um eine vertikale Drehachse 4 drehbar ist. Diese Drehachse 4 ist identisch mit der Mittenachse des nicht dargestellten Blaskopfes.

Das Hilfsgestell 18 weist einen horizontal verlaufenden Ausleger 19 auf, der einen U-förmigen Rahmen 20 lagert, der seinerseits die Wendestange 2 lagert. Dieser Rahmen 20 ist um eine vertikale Achse 3 schwenkbar. Die zweite Wendestange 6 wird ebenfalls von einem U-förmigen Rahmen 21 gelagert, der seinerseits um eine vertikale Schwenkachse 7 schwenkbar an einem Hilfsrahmen 22 gelagert ist, der am stationären Rahmen 17 in Pfeilrichtung 10 verschiebbar ist.

Zwischen der einen Wendestange 6 und der Umlenkwalze 5 verläuft die flachgelegte Schlauchfolie 13' in Pfeilrichtung 9. Ihr korrekter Verlauf ist gegeben, wenn ihre beiden Kanten 23, 24 einen gleichen Abstand zur Ebene 8 aufweisen, die bestimmt wird durch die vertikalen Achse 4, 7.

Im Bereich zwischen der einen Wendestange 6 und der Umlenkwalze 5 ist eine Meßvorrichtung 25 angeordnet, die aus zwei Kantenabtastern 26, 27 besteht. Erfassen diese Kantenabtaster 26, 27 einen Versatz der Kanten 23, 24 in bezug auf die Ebene 8, dann erzeugen sie Meßsignale, die einer Steuerschaltung 28 zugeführt werden. In linearer Abhängigkeit der Meßsignale erzeugt die Steuerschaltung 28 Steuersignale, die dem Motor 29 zugeführt werden, der auf dem Hilfsrahmen 22 angeordnet ist und bei seinem Betrieb den U-förmigen Rahmen 21 und damit die Wendestange 6 um die vertikale Achse 7 schwenkt. Der Motor 29, bei dem es sich bevorzugt um einen Elektromotor handelt, greift mit seinem Ausgangsritzel an dem U-förmigen Rahmen 21 an und verschwenkt diesen um die Achse 7 relativ zum Hilfsrahmen 22.

Der Motor 29, der in Abhängigkeit von der Drehbewegung des Hilfsgestells 18 gesteuert wird, führt also eine zusätzliche, von der Meßvorrichtung 25 bestimmte Steuerung aus.

Die Korrektur des Verlaufs der Kanten 23, 24 kann auch erfolgen über einen weiteren Motor 31, der zwischen dem Ausleger 19 und dem Rahmen 20 angeordnet ist und der diesen Rahmen 20 zusammen mit der Wendestange 2 um die Achse 3 schwenkt. In diesem Fall werden die Steuersignale diesem Motor 31 zugeführt. Dieser Motor 31 wird ansonsten in Abhängigkeit der Drehbewegung des Hilfsgestells 18 gesteuert.

Die Meßvorrichtung 25 kann auch unmittelbar vor der Aufwickelvorrichtung 30 angeordnet sein.

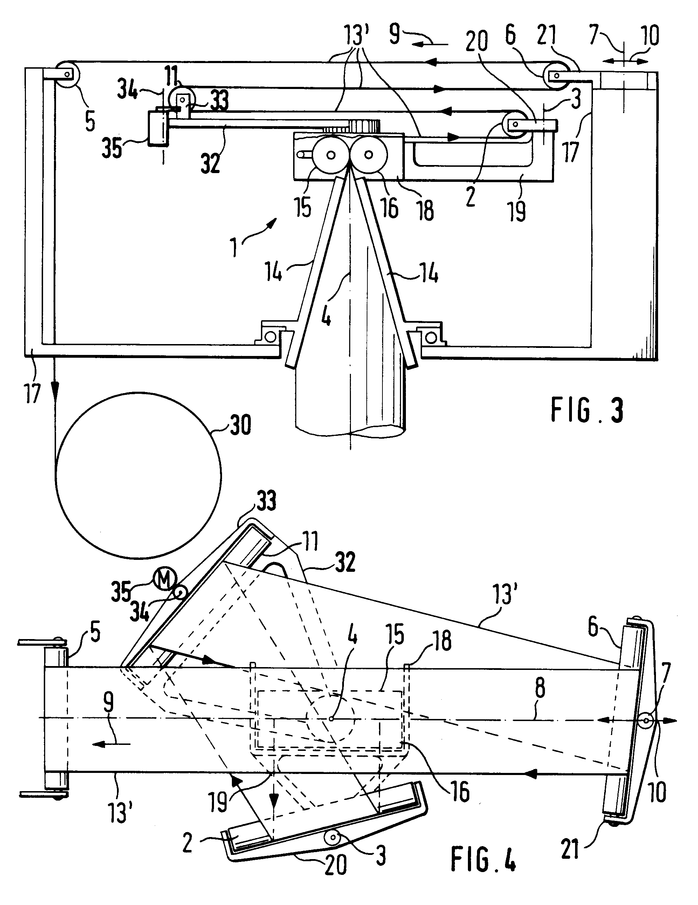

Bei der Ausführungsform nach den Figuren 3 und 4 sind für gleiche Teile die gleichen Bezugszeichen verwendet. Bei diesem Ausführungsbeispiel ist eine weitere Wendestange 11 vorgesehen, die zwischen der ersten und zweiten Wendestange 2, 6 angeordnet ist und die von einem Rahmen 33 gelagert wird. Dieser Rahmen wird von einem Drehgestell 32 gelagert, das um die Drehachse 4 schwenkbar ist. Die Drehbewegung des Drehgestells 32 erfolgt in Abhängigkeit der Drehbewegung des Hilfsgestells 18.

Zwischen dem Rahmen 33 und dem Drehgestell 32 ist ein Lager vorgesehen, mit dem der Rahmen 33 um eine vertikale Achse 34 relativ zum Drehgestell 32 schwenkbar ist. Zwischen dem Rahmen 33 und dem Drehgestell 32 ist ein Motor 35 vorgesehen, durch den diese Schwenkbewegung gesteuert wird. In diesem Fall werden die Steuersignale diesem Motor 35 zugeführt.

In allen Fällen sind die vertikalen Drehachsen 3, 7, 34, um die die Rahmen 20, 21, 33 geschwenkt werden, wenn den jeweiligen Motoren (29, 31, 35) Steuersignale von der Steuerschaltung 28 zugeführt werden, nahe den horizontalen Drehachsen der Stangen 2, 6, 11 angeordnet.

Das gleiche Prinzip ist anwendbar bei der eingangs genannten Abzugsvorrichtung. Die dortige Wendestange, von der die Folie zur Aufwickelvorrichtung führt, wird bezüglich ihrer Schwenkbewegung, wie eingangs erwähnt, durch die Folie zwangsgesteuert. In diesem Fall wird dann die jeweilige Schwenkstellung durch einen Motor korrigiert, der am Gestell die Wendestange lagert. In gleicher Weise kann vorgegangen werden bezüglich der beiden Umlenkstangen, deren Rahmen ebenfalls in der Nähe ihrer horizontalen Drehachsen mit einem Lager und einem den jeweiligen Rahmen verschwenkenden Motor versehen werden.

Soweit im vorstehenden von Abzugsvorrichtungen gesprochen wurde, so ist hierunter auch eine die flachgelegte Schlauchfolie weiterverarbeitende Maschine wie z.B. eine Beutelmaschine zu verstehen.

**Patentansprüche**

1. Abzugsvorrichtung für eine im Blasverfahren von einem Extruder mit Folienblaskopf hergestellte Schlauchfolie (13), die zwischen einer Abquetschvorrichtung (1) flach gelegt wird, die sich um eine vertikale Drehachse (4) reversierend dreht, mit mindestens zwei der Abquetschvorrichtung (1) nachgeordneten Wendestangen (2, 6), die um mindestens eine vertikale Achse (7) schwenkbar sind, gegebenenfalls mit mindestens einer Umlenkstange (5), wobei die Wendestangen (2, 6) jeweils von einem Rahmenteil (20, 21) um eine horizontale Drehachse drehbar gelagert werden, wobei dieser Abzugsvorrichtung eine Aufwickelvorrichtung (30) für die flach gelegte Schlauchfolie nachgeordnet ist, **dadurch gekennzeichnet,** daß zwischen der einen Wendestange (6), von der die Schlauchfolie (13') zur Aufwickelvorrichtung (30) führt, und dieser Aufwickelvorrichtung (30) eine den Kantenverlauf der Schlauchfolie (13') erfassende Meßvorrichtung (25) angeordnet ist, die bei einer Abweichung des Kantenverlaufs vom Normalverlauf ein von der Abweichung abhängiges Meßsignal erzeugt, das einer Steuerschaltung (28) zugeführt wird, die das Meßsignal in ein Steuersignal umwandelt und das Rahmenteil (20, 21, 33) einer der Stangen (2, 6, 11) mit einem Motor (29, 31, 35) verbunden ist, der dieses Rahmenteil (20, 21, 33) um ein Lager mit vertikaler Drehachse (3, 7, 34) schwenkt und dem das Steuersignal zugeführt wird.

2. Abzugsvorrichtung nach Anspruch 1, dadurch **gekennzeichnet,** daß die Lager mit vertikaler Drehachse (3, 7, 34) nahe der horizontalen Drehachse der Stangen (2, 6, 11) angeordnet sind.

3. Abzugsvorrichtung nach Anspruch 1 oder 2, dadurch **gekennzeichnet,** daß die Meßapparatur (25) zwischen der einen Wendestange (6) und einer Umlenkwalze (5) der Aufwickelvorrichtung (30) angeordnet ist.

**4.** Abzugsvorrichtung nach Anspruch 1 oder 2, dadurch **gekennzeichnet,** daß die Meßapparatur (25) unmittelbar vor der Aufwickelvorrichtung (30) angeordnet ist.

**5.** Abzugsvorrichtung nach einem der Ansprüche 1 bis 4, dadurch **gekennzeichnet,** daß der durch das Steuersignal über den Motor (29) bewirkte Schwenkwinkel der einen Wendestange (6) bis zu 5° beträgt.

**6.** Abzugsvorrichtung nach einem der Ansprüche 1 bis 4, dadurch **gekennzeichnet,** daß der durch das Steuersignal über den zugehörigen Motor (31, 35) bewirkte Schwenkwinkel bei einer der Stangen (2, 11), die vor der einen Stange (6) liegen, bis zu 10° beträgt.

**7.** Abzugsvorrichtung nach Anspruch 6, dadurch **gekennzeichnet,** daß die mittlere Wendestange (11) mit ihrem Rahmenteil (33) über ein Lager mit vertikaler Drehachse (34) an einem Drehgestell (32) angeordnet ist, das sich um die gleiche Achse wie die Abquetschvorrichtung (14, 15, 16) dreht.

**Claims**

**1.** A delivery device for a tubular film (13) which is produced in accordance with the blowing-extrusion method by means of an extruder equipped with a film blowing-extrusion head and which is laid flat between a squeezing device (1) which rotates in reversing fashion about a vertical axis of rotation (4), with at least two turning bars (2,6) which are arranged following the squeezing device (1) and which can be pivoted about at least one vertical axis (7), possibly with at least one deflecting bar (5), where the turning bars (2, 6) are each supported by a respective frame component (20, 21) so as to be rotatable about a horizontal axis of rotation, where said delivery device is followed by a take-up device (30) for the flattened tubular film, characterised in that between the first turning bar (6), from which the tubular film (13') extends to the take-up device (30), and said take-up device (30) is arranged a measuring device (25) which detects the edge shape of the tubular film (13') and which, in the event of a deviation of the edge shape from the normal shape, generates a measurement signal which is dependent upon the deviation and which is fed to a control circuit (28) by which the measurement signal is converted into a control signal, and the frame component (20, 21, 33) of one of the bars (2, 6, 11) is connected to a motor (29, 31, 35) which pivots said frame component (20, 21, 33) about a bearing having a vertical axis of rotation (3, 7, 34) and to which the control signal is supplied.

**2.** A delivery device as claimed in Claim 1, characterised in that the bearings (3, 7, 34) which have a vertical axis of rotation are arranged close to the horizontal axis of rotation of the bars (2, 6, 11).

**3.** A delivery device as claimed in Claim 1 or 2, characterised in that the measuring apparatus (25) is arranged between the first turning bar (6) and a guide roller (5) of the take-up device (30).

**4.** A delivery device as claimed in Claim 1 or 2, characterised in that the measuring apparatus (25) is arranged directly in advance of the take-up device (30).

**5.** A delivery device as claimed in one of Claims 1 to 4, characterised in that the pivoting angle, which is produced by the control signal via the motor (29), of the first turning bar (6) amounts to up to 5°.

**6.** A delivery device as claimed in one of Claims 1 to 4, characterised in that the pivoting angle, which is produced by the control signal via the associated motor (31, 35), amounts to up to 10° in the case of one of the bars (2, 11) located in advance of the first bar (6).

**7.** A delivery device as claimed in Claim 6, characterised in that the central turning bar (11) with its frame component (33) is mounted, via a bearing with a vertical axis of rotation (34), on a rotating frame (32) which rotates about the same axis as the squeezing device (14, 15, 16).

**Revendications**

**1.** Dispositif extracteur, pour une feuille formée en tuyau (13), fabriquée suivant un procédé de soufflage en partant d'une extrudeuse à tête de soufflage de feuilles, la feuille (1) posée à plat étant introduite dans un dispositif de formation de jointure par écrasement qui tourne de façon inversible autour d'un axe de rotation vertical (4), avec au moins deux des barres d'orientation (2,6), disposées en aval du dispositif de formation de jointure (1), pivotant autour d'au moins un axe vertical (7), le cas échéant avec au moins une barre de renvoi (5), les barres d'orientation (2,6) étant respectivement montées tournantes autour d'un axe de rotation horizontal, sur une partie de cadre (20,21), un dispositif d'enroulement (30) pour la feuille en tuyau, posée à plat, étant disposé en aval de ce dispositif d'extraction, caractérisé en ce qu'entre l'une des tiges de rotation (6), d'où la feuille en tuyau (13') est conduite au dispositif d'enroulement (30), et ce dispositif d'enroulement (30) comportant un dispositif de mesure (25), mesurant le bon défilement des bords de la feuille en tuyau (13'), qui, en cas d'écart de l'allure de l'arête par rapport à l'allure normale, produit un signal de mesure, qui est fonction de l'écart et envoyé à un circuit de commande (28), qui convertit le signal de mesure en un signal de commande et la partie de cadre (20,21,33) étant reliée à l'une des barres (2,6,11) à l'aide d'un moteur (29,31,35), qui fait pivoter cette partie de cadre (20,21,33) autour d'un palier à axe de rotation vertical (3,7,34) et à qui est envoyé le signal de commande.

2. Dispositif extracteur selon la revendication 1, caractérisé en ce que les paliers à axe de rotation vertical (3,7,34) sont disposés à proximité de l'axe de rotation horizontal des barres (2,6,11).

3. Dispositif extracteur selon la revendication 1 ou 2, caractérisé en ce que l'appareillage de mesure (25) est disposé entre un rouleau de rotation (6) et un rouleau de renvoi (5) du dispositif d'enroulement (30).

4. Dispositif extracteur selon la revendication 1 ou 2, caractérisé en ce que l'appareillage de mesure (25) est disposé immédiatement avant le dispositif d'enroulement (30).

5. Dispositif extracteur selon l'une des revendications 1 à 4, caractérisé en ce que l'angle de pivotement de l'une des barres d'orientation (6), provoqué par le signal de commande, par l'intermédiaire du moteur (29), va jusqu'à 5°.

6. Dispositif extracteur selon l'une des revendications 1 à 4, caractérisé en ce qué l'angle de pivotement de l'une des barres (2,11) disposées avant la barre (6), provoqué par le signal de commande, par l'intermédiaire du moteur (31,35) correspondant, va jusqu'à 10°.

7. Dispositif extracteur selon la revendication 6, caractérisé en ce que la barre d'orientation centrale (11) est disposée avec sa partie de cadre (33), sur un palier à axe de rotation vertical (34), sur un bâti tournant (32) qui tourne autour du même axe que le dispositif de formation de jointure (14,15,16).

FIG.1

FIG.2

FIG.3

FIG.4